# EUROPEAN PATENT APPLICATION

(11) **EP 4 700 938 A1**
(43) Date of publication of application: **25.02.2026**
(21) Application number: 25195843.5
(22) Date of filing: 14.08.2025
(51) Int. Cl.: H01M 50/211, H01M 50/278, H01M 50/291

(54) **BATTERY MODULE AND BATTERY PACK**

(30) Priority: 23.08.2024 CN 202422065701 U
(71) Applicant: AESC Japan Ltd., Yokohama-Shi, Kanagawa 220-0012 (JP)
(72) Inventor: SHI, Bowen, Pudong New Area Shanghai, Shanghai 201315 (CN)
(74) Representative: Becker, Eberhard

(57) **Abstract**

Disclosed are a battery module and a battery pack. The battery module includes: a shell (1), having an opening; multiple battery cell stacking bodies (2), having a tab side, and are stacked and arranged in the shell (1); a partition (5), disposed on the shell (1), and separating adjacent two battery cell stacking bodies (2); and an adhesive block (3), filled in the opening to block the opening and cover the tab side of the battery cell stacking body (2). The partition (5) may reduce the influence on adjacent battery cell stacking bodies (2) when the battery cell stacking body (2) loses control, lowering the risk of thermal spread. The adhesive block (3) has effects of heat insulation and flame retardation. The adhesive block (3) blocks the opening, ensuring structural strength and product performance without the need to separately dispose the end plate to block the opening.

## Description

### BACKGROUND

### Technical Field

The disclosure relates to a field of power battery technology, and in particular to a battery module and a battery pack.

### Description of Related Art

With the development of battery technology, batteries are increasingly widely applied, and the safety requirements are also becoming higher. In order to meet the usage demands, an interior of a battery module is generally equipped with multiple battery cell stacking bodies, and there is a risk of thermal runaway occurring in the battery cell stacking bodies during use. If thermal runaway occurs in a battery cell stacking body, the adjoining normally operating battery cell stacking bodies may be easily affected, thereby triggering more serious safety accidents, resulting in poor safety performance.

### SUMMARY

Given the aforementioned drawbacks of the existing technology, a purpose of the disclosure lies in providing a battery module and a battery pack, for solving the problem in the existing technology where a battery cell stacking body of the battery module easily affects adjoining battery cell stacking bodies during thermal runaway, to improve the safety performance of the battery module and the battery pack.

To achieve the aforementioned purpose and other related purposes, the disclosure provides a battery module, including: a shell, having an opening; multiple battery cell stacking bodies, having a tab side, stacked and arranged in the shell, where a tab side of the battery cell stacking body corresponds to the opening; a partition, disposed on the shell, and separating two adjoining battery cell stacking bodies; and an adhesive block, filled in the opening to block the opening and cover the tab side of the battery cell stacking body, where an outer sidewall of the adhesive block forms a part of an outer sidewall of the battery module.

Optionally, the battery module further includes a sampling component, and at least a part of the sampling component is positioned and installed on the partition, and electrically connected to the battery cell stacking body.

Optionally, the sampling component includes a signal transport element and a sampling element, and the signal transport element includes a flexible flat cable or a wire harness, and is electrically connected to the tab of the battery cell stacking body through the sampling element.

Optionally, a positioning avoidance groove is disposed on the partition, and at least a part of the signal transport element is installed in the positioning avoidance groove.

Optionally, a sidewall of the partition is locally thinned to form the positioning avoidance groove disposed on the sidewall of the partition.

Optionally, a depth of the positioning avoidance groove in a thickness direction of the partition is T1, and 0.5mm≤T1≤2mm.

Optionally, a top wall of the partition is locally recessed downward to form the positioning avoidance groove disposed at a top end of the partition.

Optionally, the positioning avoidance groove penetrates both end walls distributed along a length direction of the partition and penetrates the top end wall of the partition.

Optionally, a cavity is disposed in an interior of the partition, and the cavity penetrates both end walls distributed along the length direction of the partition.

Optionally, a wall thickness of the cavity is T2, 1mm≤T2≤3mm, a width of the cavity in a thickness direction of the partition is T3, and 1mm≤T3≤10mm.

Optionally, the shell includes a base plate, the base plate is locally protruded and extends along a height direction of the battery cell stacking body to form the partition.

Optionally, the shell further includes a U-shaped frame, a part of the U-shaped frame forms as a top cover of the shell, and another part of the U-shaped frame forms as a side panel of the shell.

Optionally, the U-shaped frame is connected to the base plate to construct the shell having the opening at both ends.

Optionally, an exhaust hole is disposed on the top cover.

Optionally, the adhesive block includes a foam adhesive.

To achieve the aforementioned purpose and other related purposes, the disclosure further provides a battery pack including the battery module as described above.

As described above, the battery module and battery pack of the disclosure have at least the following beneficial effects. By setting the partition on the shell, the partition is convenient to dispose, the structure is stable, and the partition is beneficial for separating adjoining battery cell stacking bodies, reducing the influence on the adjoining battery cell stacking bodies when a battery cell stacking body loses control of thermal, and reducing the risk of thermal spread. Based on this, disposing an adhesive block to cover the tab side of the battery cell stacking body has the effects of heat insulation and flame retardation, which is conducive to further reducing the risk of thermal spread occurring in the battery cell stacking body. The adhesive block blocks the opening and forms a part of the outer sidewall of the battery module, which ensures the structural strength and product performance, and also eliminates the need to separately dispose the end plate to block the opening, which is beneficial for improving the safety performance and cost reduction of the battery module and battery pack.

### BRIEF DESCRIPTION OF THE DRAWINGS

FIG. 1 is an exploded schematic view of embodiment one of a battery module of the disclosure.
FIG. 2 is a front view of the battery module in FIG.1.
FIG. 3 is a partial enlarged schematic view of a base plate and a partition in FIG.2.
FIG. 4 is a structural schematic view when a sampling component is installed on a partition in FIG.1.
FIG. 5 is a partial exploded schematic view of embodiment one of the battery module of the disclosure.
FIG. 6 is a partial structural schematic view of embodiment two of a battery module of the disclosure.
FIG. 7 is a structural schematic view when a sampling component is installed on a partition in FIG. 6.
FIG. 8 is a front view of a sampling component and a partition in FIG. 7.
FIG. 9 is an enlarged schematic view of a local part A in FIG. 7.
FIG. 10 is a structural schematic view of embodiment one of the battery module of the disclosure.

### DESCRIPTION OF THE EMBODIMENTS

An implementation manner of the disclosure is explained below by specific embodiments. Persons skilled in the art may easily understand other advantages and effects of the disclosure from the content disclosed in this specification.

It should be noted that the structure, proportion, and size shown in the drawings attached to this specification are only used to match the content disclosed in the specification for understanding and reading by those skilled in the art, and are not intended to limit the restrictive conditions under which the disclosure may be implemented. Therefore, the structure, proportion, and size have no substantial technical significance. Any modification of structure, change in proportion or adjustment in size, without affecting the effect that the disclosure may produce and the purpose the disclosure may achieve, should still fall within the scope that can be covered by the technical content disclosed in the disclosure. At the same time, terms such as "upper", "lower", "left", "right", "middle", and "one" quoted in this specification are also only for clarity of description, and not to limit the scope in which the disclosure may be implemented. Changes or adjustments in the relative relationships, without substantial changes to the technical content, should also be considered as falling within the scope in which the disclosure may be implemented.

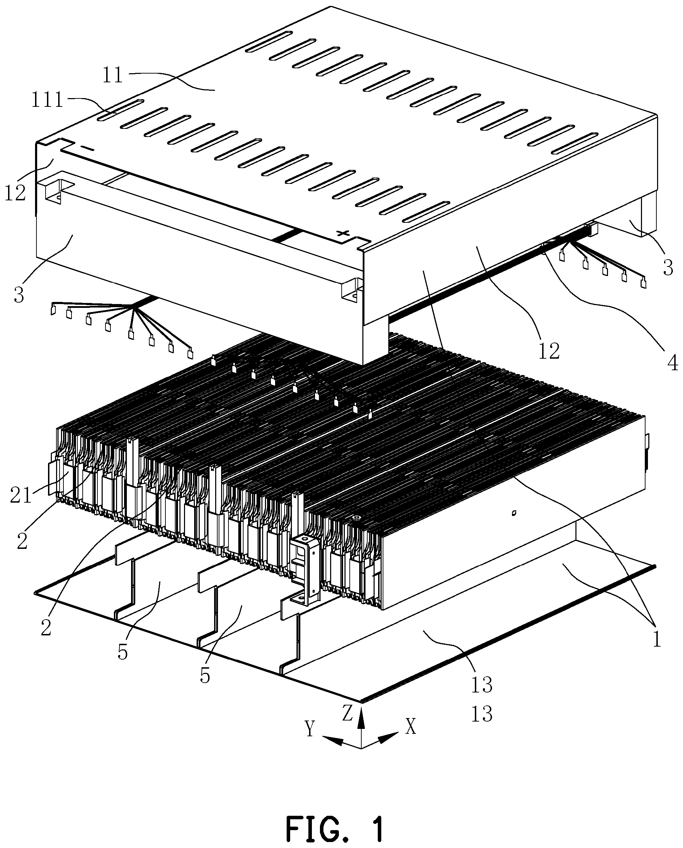

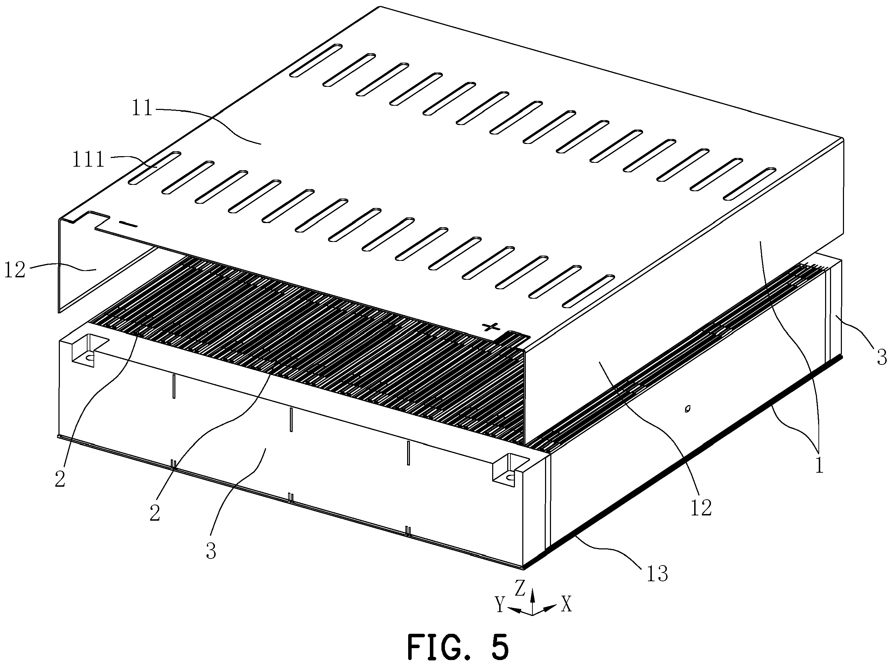

Referring to FIG. 1 and FIG. 5, in some optional embodiments, the disclosure provides a battery pack including a battery module.

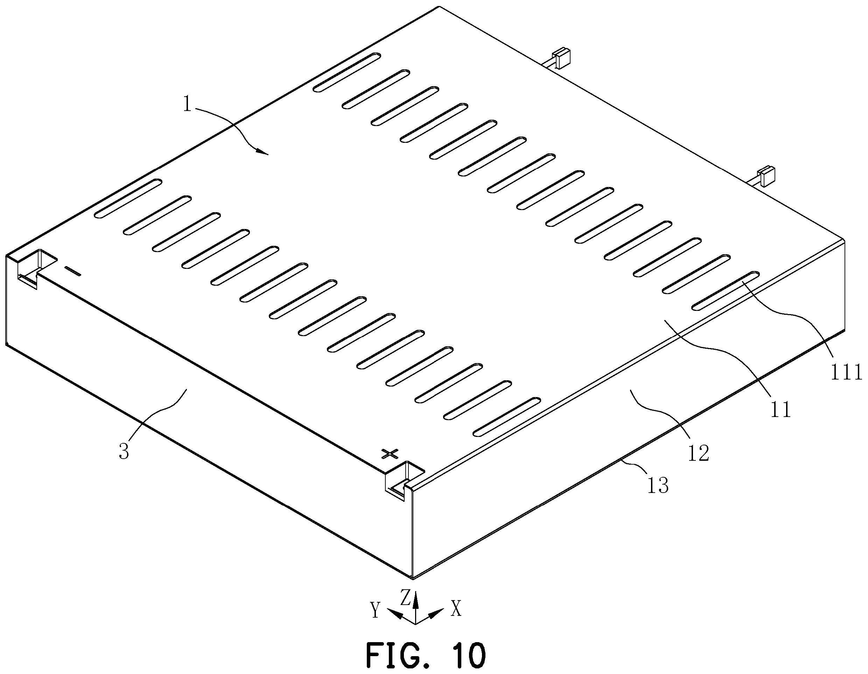

Referring to FIG. **1****,** FIG. 5, and FIG. 10, in some optional embodiments, the battery module provided by the disclosure includes a shell 1, multiple battery cell stacking bodies 2, a partition 5, and an adhesive block 3. In addition to the aforementioned components, the battery module may further include a sampling component 4. The shell 1 has an opening. The battery cell stacking body 2 has a tab side. The battery cell stacking bodies 2 are stacked and arranged in the shell 1, and the tab side of the battery cell stacking body 2 corresponds to the opening. The partition 5 is disposed on the shell 1, and separates two adjoining battery cell stacking bodies 2. The adhesive block 3 fills the opening to block the opening and covers the tab side of the battery cell stacking body 2, and an outer sidewall of the adhesive block 3 forms a part of an outer sidewall of the battery module. That is, the outer side of the adhesive block 3 does not have other structures to cover the adhesive block 3, so that the adhesive block 3 may serve as the function of an end plate of a traditional battery module.

Optionally, the battery cell stacking body 2 includes multiple stacked battery cells. The battery cell has a tab 21. The tabs 21 are disposed at both ends distributed along a length direction of the battery cell. The tab side of the battery cell stacking body 2 is located on the same side as the tab side of the battery cell with the tab 21. In the disclosure, an arrangement direction of the battery cell stacking bodies 2, a stacking direction of the battery cells in the same battery cell stacking body 2, and a thickness direction of the partition 5 are the same, that is, an Y direction in the drawings. A length direction of the battery cell stacking body 2, the length direction of the battery cell, and a length direction of the partition 5 are the same, that is, an X direction in the drawings.

Optionally, the shell 1 includes a base plate 13. A local part of the base plate 13 protrudes and extends along a height direction of the battery cell stacking body 2 to form the partition 5. That is, the partition 5 and the base plate 13 may be an integral structure, which is conducive to simplifying the assembling process. Furthermore, the partition 5 and the base plate 13 may be made of aluminum extrusion. The partition 5 and the base plate 13 may be arranged vertically in an inverted T-shape. In the disclosure, the height direction of the battery cell stacking body 2 and a height direction of the partition 5 are the same, that is, a Z direction in the drawings.

Optionally, the shell 1 further includes a U-shaped frame. A part of the U-shaped frame forms a top cover 11 of the shell 1, and another part of the U-shaped frame forms a side panel 12 of the shell 1. The structure is simple, so no further assembly is required, which is conducive to simplifying the assembling process. Exhaust holes 111 are disposed on the top cover 11. When the battery cell stacking body 2 loses control of thermal, high-temperature smoke may be discharged from the shell 1 through the exhaust holes 111. Furthermore, the U-shaped frame is connected to the base plate 13 to construct the shell 1 with openings at both ends.

Optionally, the adhesive block 3 includes a foam adhesive, which is simple, convenient, and quick to fill, with the effects of good insulation and heat isolation. During specific disposing, a tool may be used to block the opening first, then the foam adhesive is poured into the shell 1, and when the foam adhesive completes foaming and forms a stable adhesive block structure that blocks the opening, the tool is removed, thereby completing the disposing of the adhesive block 3.

In the battery module of the aforementioned embodiment, adjacent battery cell stacking bodies 2 are separated by the partitions 5 disposed on the shell 1, which may achieve thermal runaway protection between the battery cell stacking bodies 2, and may conducive to reducing the impact of the battery cell stacking body 2 that loses control of thermal on the adjacent normal battery cell stacking bodies 2, reducing the risk of further spread of thermal runaway. By covering the tab side of the battery cell stacking body 2, the adhesive block 3 may serve as the function in flame retardation and heat isolation, further reducing the risk of thermal spread and improving safety performance. In addition, when covering the tab side of the battery cell stacking body 2, the adhesive block 3 may also block the opening of the shell 1 and form the part of the outer sidewall of the battery module to replace the end plate, eliminating the need for a separate additional end plate, which is conducive to reducing weight and cost reduction.

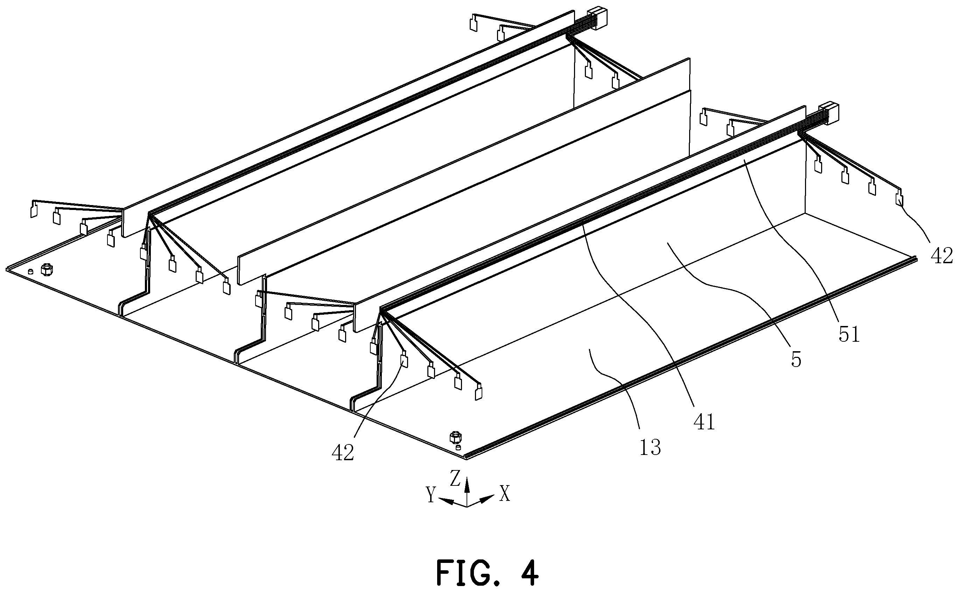

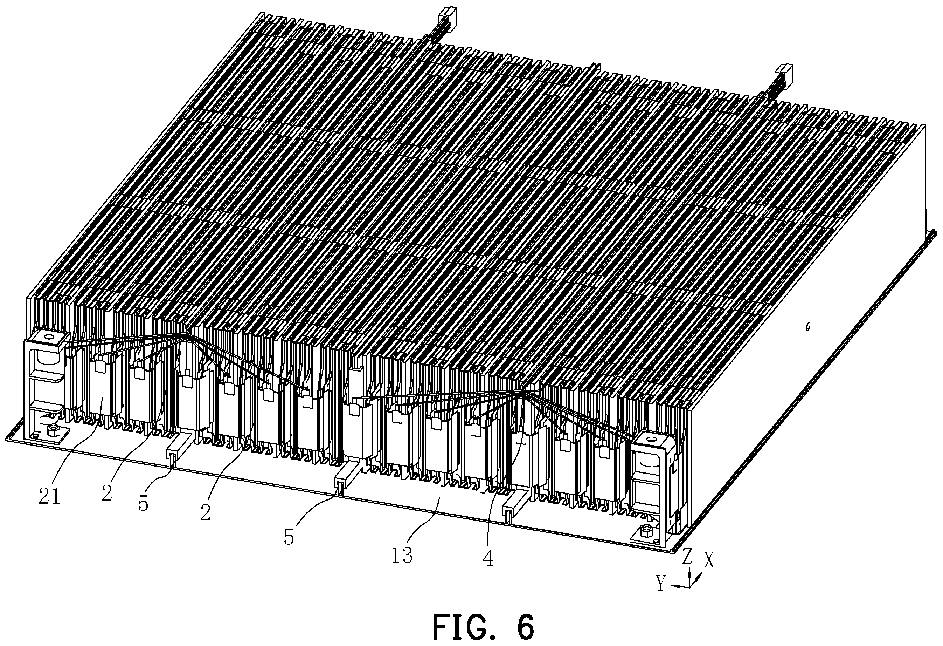

Referring to FIG. 4 and FIG. 6, in some optional embodiments, at least a part of the sampling component 4 is positioned and installed on the partition 5. The sampling component 4 is electrically connected to the battery cell stacking body 2. Through the sampling component 4, information such as temperature and voltage of the battery cell stacking body 2 may be collected.

Optionally, the sampling component 4 includes a signal transport element 41 and a sampling element 42. The signal transport element 41 includes a flexible flat cable or wire harness. The signal transport element 41 is electrically connected to the tab 21 of the battery cell stacking body 2 through the sampling element 42. The sampling element 42 includes a nickel sheet. The nickel sheet is electrically connected to the tab 21 of the battery cell. The signal transport element 41 uses a flexible flat cable or a wire harness, which is conducive to cost reduction and flexible and convenient wiring layout.

Optionally, a positioning avoidance groove 51 is disposed on the partition 5. At least a part of the signal transport element 41 is installed in the positioning avoidance groove 51, which is convenient for installation, compact in layout, and conducive to improving space utilization. Both ends of the signal transport element 41 extend out of the positioning avoidance groove 51 and are connected to multiple sampling elements 42. The sampling elements 42 may be distributed along the stacking direction of the battery cells. The sampling elements 42 may be disposed corresponding to the tabs 21 of the battery cells, in order to collect information from each battery cell.

In the battery module of the aforementioned embodiment, the sampling component 4 is positioned and installed on the partition 5, which is simple and convenient for installation. Through providing installation support for the sampling component 4, the partition 5 may eliminate the need for separate supporting components, which is conducive to simplifying the structure and cost reduction.

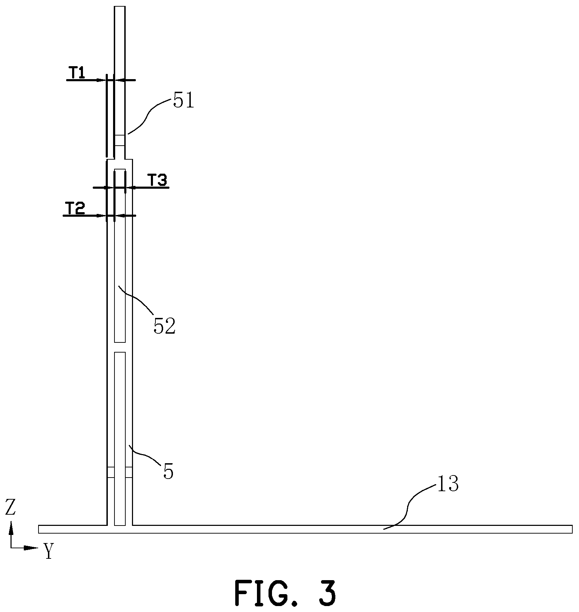

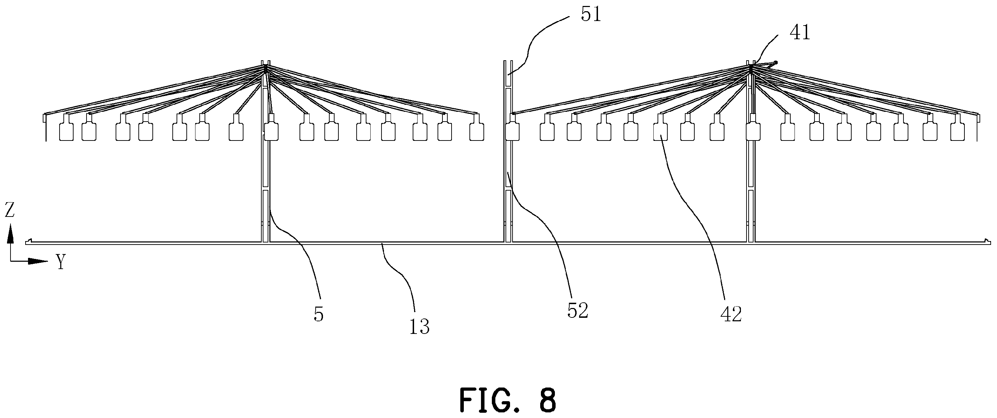

Referring to FIG. 3 and FIG. 8, in some optional embodiments, the positioning avoidance groove 51 penetrates both end walls distributed along the length direction of the partition 5 as well as penetrates the top end wall of the partition 5. This structure design facilitates the installation and wiring of the signal transport element 41, making assembly simple and convenient. The longitudinal cross-section of the positioning avoidance groove 51 may be L-shaped, U-shaped, or other shapes, with a simple structure and low difficulty in forming and manufacturing.

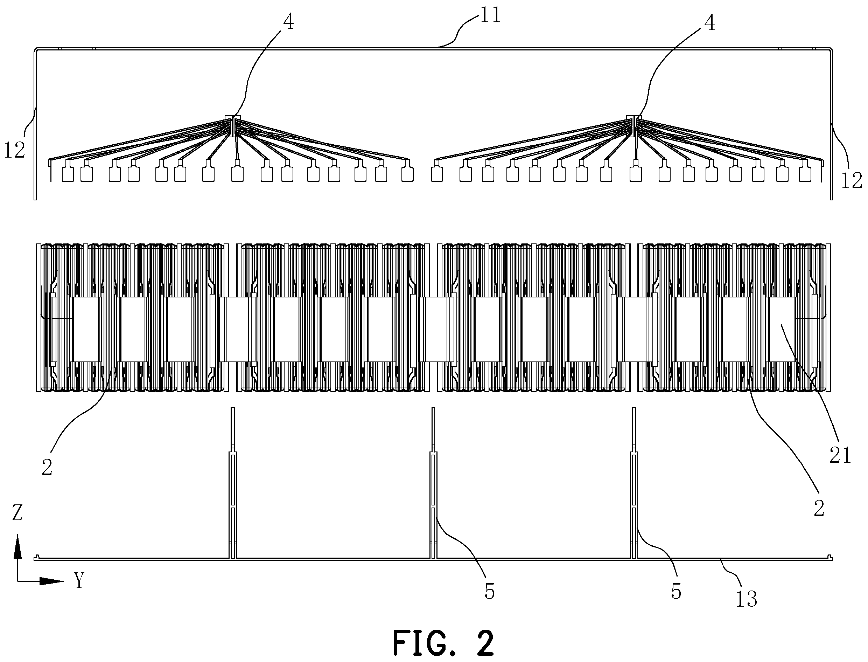

Referring to FIG. 1 to FIG. 4, in some optional embodiments, the sidewall of the partition 5 is locally thinned to form the positioning avoidance groove 51 disposed on the sidewall of the partition 5. The partition 5 has a first sidewall and a second sidewall distributed along the thickness direction. The positioning avoidance groove 51 is disposed on the first sidewall and/or the second sidewall of the partition 5.

Optionally, the longitudinal cross-section of the positioning avoidance groove 51 is L-shaped.

Optionally, a depth T1 of the positioning avoidance groove 51 in the thickness direction of the partition 5 is 0.5mm≤T1≤2mm. Further, T1 may be any value among 0.5mm, 0.7mm, 1mm, 1.5mm, or 2mm.

In the battery module of the above embodiment, the positioning avoidance groove 51 may be disposed on the first sidewall and the second sidewall of the partition 5 that face away from each other, adjoining sample assemblies 4 may be separated by the partition 5, which is conducive to reducing the influence of the sampling component 4 corresponding to the battery cell stacking body 2 that loses control of thermal on other normal sample assemblies 4, and is conducive to improving safety.

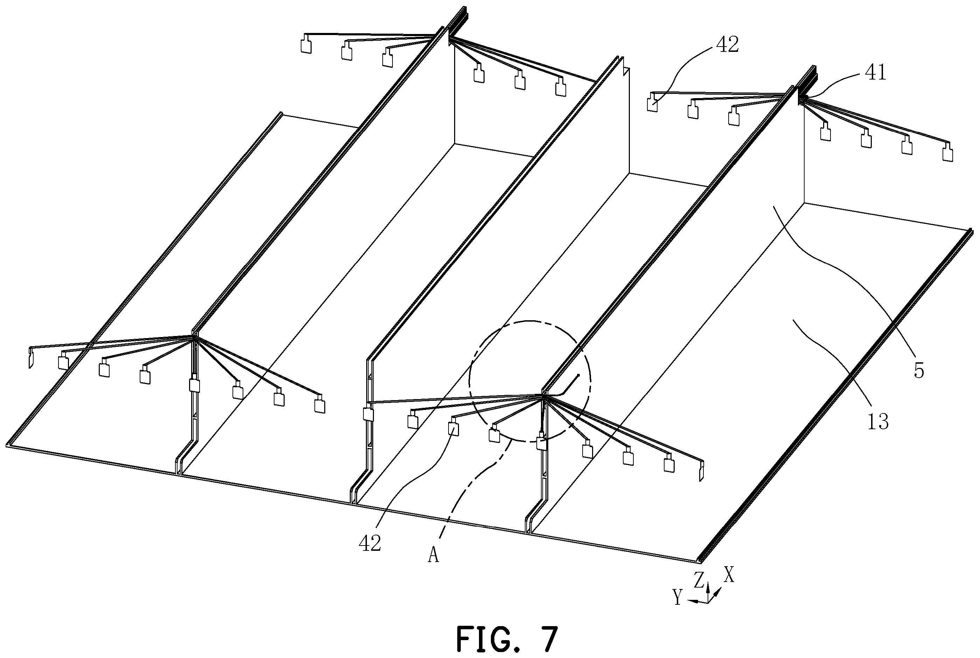

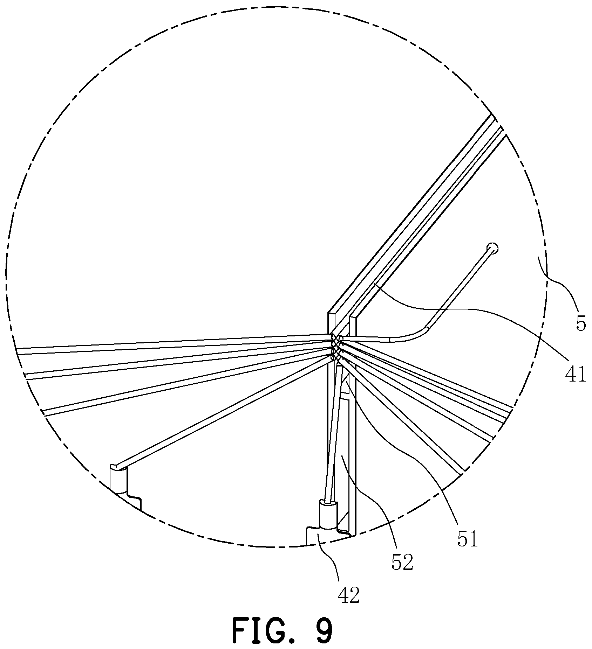

Referring to FIG. 5 to FIG. 9, in some optional embodiments, a top wall of the partition 5 is locally recessed downward to form the positioning avoidance groove 51 disposed at an top end of the partition 5.

Optionally, the longitudinal cross-section of the positioning avoidance groove 51 is U-shaped.

In the battery module of the aforementioned embodiment, at least a part of the signal transport elements 41 of the adjoining sample assemblies 4 are all located within the positioning avoidance groove 51. The positioning avoidance groove 51 surrounds at least a part of the signal transport element 41, which has a certain protective effect on the signal transport element 41, making the signal transport element 41 less susceptible to interference from other components.

Referring to FIG. 3, in some optional embodiments, a cavity 52 is equipped inside the partition 5. The cavity 52 penetrates through the both end walls of the partition 5 distributed along the length direction.

Optionally, a wall thickness T2 of the cavity 52 is 1mm≤T2≤3mm. Further, T2 may be any value among 1mm, 1.5mm, 1.7mm, 2mm, 2.5mm, or 3mm.

Optionally, a width T3 of the cavity 52 in the thickness direction of the partition 5 is 1mm≤T3≤10mm. Further, T3 may be any value among 1mm, 2mm, 4mm, 8mm, 8.5mm, or 10mm.

In the battery module of the aforementioned embodiment, the cavity 52 is disposed inside the partition 5, which is conducive to reducing a weight of the partition 5, thereby helping to reduce the overall weight of the battery module and cost reduction. In addition, disposing a hollow cavity inside the partition 5 is also conducive to improving the heat insulation effect of the partition 5, thereby helping to improve the safety performance of the battery module.

In the battery module and battery pack of the disclosure, the partition 5 separates the battery cell stacking body 2. The adhesive block 3 covers the tab side of the battery cell stacking body 2, which is conducive to reducing the risk of spreading when the battery cell stacking body 2 experiences thermal runaway, and the adhesive block 3 may replace the traditional end plate, which is beneficial for simplifying the structure, reducing cost while ensuring the product performance of the battery module and battery pack.

## Claims

1. A battery module, comprising:
a shell (1), having an opening;
a plurality of battery cell stacking bodies (2), having a tab side, stacked and arranged in the shell (1), wherein a tab side of the battery cell stacking bodies (2) corresponds to the opening;
a partition (5), disposed on the shell (1), and separating two adjacent battery cell stacking bodies (2);and
an adhesive block (3), filling the opening to block the opening and cover the tab side of the battery cell stacking body (2), wherein an outer sidewall of the adhesive block (3) forms a part of an outer sidewall of the battery module.

2. The battery module according to claim 1, wherein the battery module further comprises a sampling component (4), and at least a part of the sampling component (4) is positioned and installed on the partition (5), and is electrically connected to the battery cell stacking bodies (2).

3. The battery module according to claim 2, wherein the sampling component (4) comprises a signal transport element (41) and a sampling element (42), and the signal transport element (41) comprises a flexible flat cable or a wire harness, and is electrically connected to the tab (21) of the battery cell stacking bodies (2) through the sampling element (42).

4. The battery module according to claim 3, wherein a positioning avoidance groove (51) is disposed on the partition (5), and at least a part of the signal transport element (41) is installed in the positioning avoidance groove (51).

5. The battery module according to claim 4, wherein a sidewall of the partition (5) is locally thinned to form the positioning avoidance groove (51) disposed on the sidewall of the partition (5).

6. The battery module according to claim 5, wherein a depth of the positioning avoidance groove (51) in a thickness direction of the partition (5) is T1, and 0.5mm≤T1≤2mm.

7. The battery module according to claim 4, wherein a top wall of the partition (5) is locally recessed downward to form the positioning avoidance groove (51) disposed at a top end of the partition (5).

8. The battery module according to any one of claims 4 to 7, wherein the positioning avoidance groove (51) penetrates both end walls of the partition (5) distributed along a length direction of the partition (5) and penetrates the top end wall of the partition (5).

9. The battery module according to claim 1, wherein a cavity (52) is disposed in an interior of the partition (5), and the cavity (52) penetrates both end walls of the partition (5) distributed along a length direction of the partition (5).

10. The battery module according to claim 9, wherein a wall thickness of the cavity (52) is T2, 1mm≤T2≤3mm, a width of the cavity (52) in a thickness direction of the partition (5) is T3, and 1mm≤T3≤10mm.

11. The battery module according to claim 1, wherein the shell (1) comprises a base plate (13), and the base plate (13) is locally protruded and extends along a height direction of the battery cell stacking body (2) to form the partition (5).

12. The battery module according to claim 11, wherein the shell (1) further comprises a U-shaped frame, a part of the U-shaped frame forms a top cover (11) of the shell (1), and another part of the U-shaped frame forms a side panel (12) of the shell (1).

13. The battery module according to claim 12, wherein the U-shaped frame is connected to the base plate (13) to construct the shell (1) having the opening at both ends.

14. The battery module according to claim 12, wherein an exhaust hole (111) is disposed on the top cover (11).

15. The battery module according to claim 1, wherein the adhesive block (3) comprises a foam adhesive.

16. A battery pack, comprising the battery module according to any one of claims 1 to 15.
